Europäisches Patentamt

(19) European Patent Office

Office européen des brevets

(11) Publication number: **0 344 862**
**B1**

(12) **EUROPEAN PATENT SPECIFICATION**

(45) Date of publication of the patent specification:
27.12.90

(21) Application number: **89201378.0**

(22) Date of filing: **30.05.89**

(51) Int. Cl.⁵: **F16L 3/12, F16L 33/04**

(54) **Pipe-clip.**

(30) Priority: **31.05.88 NL 8801393**

(43) Date of publication of application:
**06.12.89 Bulletin 89/49**

(45) Publication of the grant of the patent:
**27.12.90 Bulletin 90/52**

(84) Designated Contracting States:
**CH DE ES FR GB IT LI NL**

(56) References cited:
**DE-A- 3 439 418**
**DE-C- 57 622**
**DE-C- 811 763**

(73) Proprietor: **J. van Walraven B.V., Industrieweg 5,
NL-3641 RK Mijdrecht(NL)**

(72) Inventor: **Van Walraven, Jan, Prins Bernhardlaan 6,
NL-3641 GP Mijdrecht(NL)**

(74) Representative: **Boelsma, Gerben Harm, Ir.,
Octrooibureau Polak & Charlouis Laan Copes van
Cattenburch 80, NL-2585 GD Den Haag(NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to a pipe-clip, comprising an annular clip body formed from a flexible strip, the ends of which are provided with flanges, one of which having a threaded opening for the shaft of a clamping bolt and the second flange having a slot extending radially relative to the clip body and merging into the terminal edge of said flange, said second flange being integrally and rigidly formed with said strip, while the connection between said first flange and the strip is such, that when closing the annular clip body round a pipe- which causes the two flanges to move one towards the other - the bolt threaded in said first flange will first, while causing said flange to turn, tilt outwardly and will then, while said first flange is resiliently turning back, enter with its shaft in the slot of said second flange.

Such a pipe clip is known from DE-A-34 39 418.

With this well-known pipe clip the first flange a forms separate part, which has a substantially perpendicularly projecting tongue which extends through a slot at the respective end of said annular clip body and thus has a sort of hook connection with said clip body. A resilient lining of rubber is provided at the inner circumference of said clip body, tending to press the projecting tongue of the flange against the inner surface of the annular clip body so as to cause said flange to take its normal position (radially extending from the annular clip body).

When this well-known clip is applied about the pipe to be fastened, the tongue will in the initial phase of the closing of the clip body - when there is still a rather large clearance between the annular clip body and the pipe - be permitted to turn inwardly against the pressure of said rubber lining so that the flange will be permitted to pivot relative to said annular clip body so as to enable the required tilting movement of the fastening bolt. As soon as the bolt head has passed the terminal edge of the second flange, the spring action of the rubber lining causes the tongue and the first flange to return to the starting position and the shaft of the fastening bolt will "snap" into the slot of the second flange.

The advantage of a pipe clip of this type is that it may be simply applied onto the pipe to be fastened, whereby the preplaced fastening bolt will automatically enter into the fastening position.

The forming of the first flange carrying the fastening bolt as a separate part, however, makes this well-known pipe-clip rather complicated and expensive, while the proper working of it is dependent on the use of a lining acting as a spring.

The invention aims at removing this disadvantage. In accordance with the invention this aim is achieved in that the first flange is also integrally formed with said strip forming said annular clip body, and a weakening line or bending line is provided at the transition between the clip body and this flange which allows a resilient pivoting movement of the flange relative to the clip body. A so formed clip may be handled and mounted as simply as said well-known clip but is, in comparison therewith, substantially cheaper, because the annular clip body consists of one single piece and may be practically formed in one single machine course. Moreover the pipe-clip according to the invention operates in a reliable manner both with and without a lining.

In a practical embodiment the weakening or bending line is formed by two cuts which extend, at the transition between clip body and flange, from the two edges of the strip inwardly.

The invention will be hereinafter further explained by way of example with reference to the accompanying drawing.

Fig. 1 is a perspective view of the pipe-clip according to the invention and

Fig. 2A-C show a cross-section through the pipe-clip of Fig. 1 in three subsequent phases of the procedure of closing the annular clip body round the object to be clamped.

The pipe-clip shown in the drawing comprises an integrally formed annular clip body 1, which is formed from a slightly flexible strip, e.g. a thin spring bend. The ends of the annular pipe body are bent to first and second flanges 3 and 2 respectively. The second flange 2 has a radial slot 4 extending from the terminal end of said flange, while the first flange 3 is provided with a hole and a welded nut registering therewith for accommodating the threaded shaft 6 of a clamping screw 8, the head of which being indicated at 7.

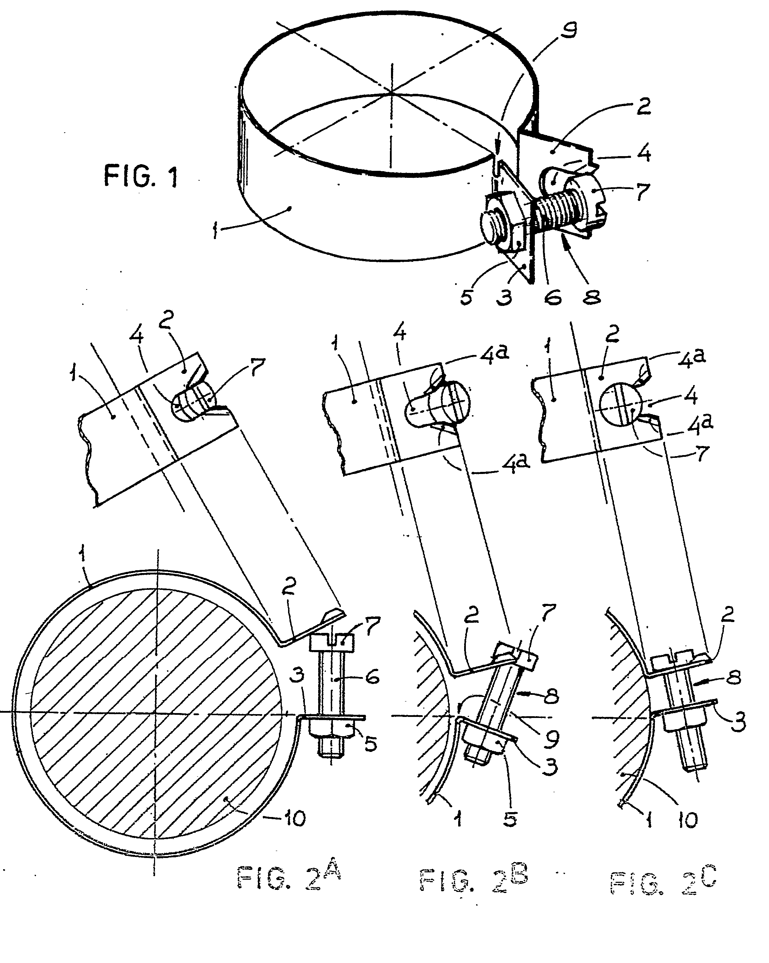

As seen in Fig. 1, a weakening line 9 is formed at the transition between the annular clamp body 1 and the flange 3, said line consisting of two cuts, each extending from a respective side edge of the strip. In this way a preferred bending line is obtained, about which the flange 3 may resiliently pivot.

Fig. 2A shows the pipe-clip in a position around the object 10 (e.g. a pipe) to be clamped in a phase in which the flange 2 abuts against the head 7 of the clamping screw 8 which has been screwed into the flange 3 in advance.

Fig. 2B shows how the clamping screw 8 is tilting outwardly as a result of the flanges 2 and 3 being moved one towards the other. It is clearly shown how the flange 3 has made a turning movement about the bending line 9 relative to the annular clip body 1.

This tilting movement is simplified in that the bolt head 7 is guided by the slightly diverging bent longitudinally edges 4a of the slot 4. As soon as the clamping screw head 7 has been moved into a position on the side of the flange turned away from the nut, the clamping screw 8 will snap with its shaft 6 into the slot 4, because the flange 3 will then be allowed to turn back to its position according to Fig. 2A.

At last Fig. 2C shows the pipe-clip in the position, in which the annular clip-body 1 has been clamped, by tightening of the clamping screw 8, around the object 10.

## Claims

1. A pipe-clip, comprising an annular clip body (1) formed from a flexible strip, the ends of which are provided with flanges (2, 3), one (3) of which having a threaded opening for the shaft of a clamping bolt (8) and the second flange (2) having a slot (4) extending radially relative to the clip body (1) and merging into the terminal edge of said flange, said second flange (2) being integrally and rigidly formed with said strip, while the connection between said first flange (3) and the strip is such that when closing the annular clip body round a pipe – which causes the two flanges (2, 3) to move one towards the other – the bolt (8) threaded in said first flange (3) will first, while causing said flange (3) to turn, tilt outwardly and will then, while said first flange (3) is resiliently turning back, enter with its shaft in the slot (4) of said second flange (2), characterized in that the first flange (3) is also integrally formed with said strip forming said annular clip body (1), and a weakening line or bending line (9) is provided at the transition between the clip body (1) and this flange (3) which allows a resilient pivoting movement of the flange (3) relative to the clip body (1).

2. A pipe-clip according to claim 1, characterized in that the weakening or bending line (9) is formed by two cuts which extend, at the transition between clip body (1) and flange (3), from the two edges of the strip inwardly.

## Patentansprüche

1. Rohrschelle, mit einem aus einem biegsamen Streifen geformten ringförmigen Schellenkörper (1), deren Enden mit Flanschen (2, 3) versehen sind, wobei die eine Flansche (3) ein Gewindeloch für den Schaft eines Klemmbolzens (8) aufweist, und die zweite Flansche (2) einen radial mit zum Schellenkörper (1) verlaufenden und in eine Endkante dieser Flansche auslaufenden Schlitz aufweist und wobei die zweite Flansche (2) und dem Streifen ein steifes Ganzes bildet, während die Verbindung zwischen der einen Flansche (3) und dem Streifen derart ist, dass beim Anbringen des ringförmigen Schellenkörpers um ein Rohr - wobei die beiden Flanschen 2, 3 gegeneinander bewegt werden - der in der einen Flansche (3) eingeschraubte Bolzen (8) zunächst, unter Drehung dieser Flansche (3), nach aussen kippt und darauf, unter Rückfederung der einen Flansche (3), mit seinem Schaft in den Schlitz (4) der zweiten Flansche (2) hineintritt, dadurch gekennzeichnet, dass die eine Flansche (3) ebenfalls mit dem den ringförmigen Schellenkörper (1) bildenden Streifen ein Ganzes bildet und beim Übergang zwischen dem Schellenkörper (1) und dieser Flansche (3) eine Schwächungslinie oder Biegelinie (9) vorgesehen ist, die eine federnde Scharnierbewegung der Flansche (3) mit bezug auf den Schellenkörper (1) gestattet.

2. Rohrschelle nach Anspruch 1, dadurch gekennzeichnet, dass die Schwächungs- oder Biegelinie (9) durch zwei Einschnitte gebildet wird, die sich beim Übergang zwischen Schellenkörper (1) und Flansche (3) von den Streifenrändern her nach innen erstrecken.

## Revendications

1. Attache pour tuyau, comportant un corps annulaire (1) d'attache formé d'une bande flexible dont les extrémités ont des flasques (2, 3) dont l'un (3) a un trou taraudé pour le passage de la tige d'un boulon de serrage (8), le second flasque (2) ayant une fente (4) disposée radialement par rapport au corps (1) de l'attache et aboutissant au bord externe du flasque, le second flasque (2) étant formé en une seule pièce avec la bande et étant raccordé rigidement à celle-ci, la connexion du premier flasque (3) et de la bande étant telle que, lors de la fermeture du corps annulaire de l'attache autour d'un tuyau - qui provoque un rapprochement des deux flasques (2, 3) l'un de l'autre - le boulon (8) vissé dans le premier flasque (3) pivote d'abord vers l'extérieur, en provoquant une rotation du flasque (3) puis, lorsque le premier flasque (3) revient élastiquement, pénètre par sa tige dans la fente (4) du second flasque (2), caractérisée en ce que le premier flasque (3) est aussi formé en une seule pièce avec la bande constituant le corps annulaire (l) de l'attache, et une ligne de faiblesse ou une ligne de flexion (9) est formée à la transition du corps (1) de l'attache et de ce flasque (3) et permet un pivotement élastique du flasque (3) par rapport au corps (1) de l'attache.

2. Attache pour tuyau selon la revendication 1, caractérisée en ce que la ligne de faiblesse ou de flexion (9) est formée par deux découpes qui partent des deux bords de la bande vers l'intérieur à la transition du corps (1) et du flasque (3).

EP 0 344 862 B1

FIG. 1

FIG. 2A    FIG. 2B    FIG. 2C